# EUROPÄISCHE PATENTSCHRIFT

(11) **EP 3 447 341 B1**
(45) Veröffentlichungstag und Bekanntmachung des Hinweises auf die Patenterteilung: **14.01.2026**
(21) Anmeldenummer: 18183743.6
(22) Anmeldetag: 16.07.2018
(51) Int. Cl.: F16H 59/48, F16H 59/36, B60W 40/12, F16H 59/68, F16H 59/74

(54) **VERFAHREN ZUM BETREIBEN EINES FAHRERASSISTENZSYSTEMS EINES KRAFTFAHRZEUGS SOWIE KRAFTFAHRZEUG MIT EINER ELEKTRONISCHEN RECHENEINRICHTUNG**
METHOD FOR OPERATING A DRIVER ASSISTANCE SYSTEM OF A MOTOR VEHICLE AND MOTOR VEHICLE WITH AN ELECTRONIC COMPUTING APPARATUS
PROCÉDÉ DE FONCTIONNEMENT D'UN SYSTÈME D'AIDE À LA CONDUITE D'UN VÉHICULE AUTOMOBILE AINSI QUE VÉHICULE AUTOMOBILE POURVU D'UN DISPOSITIF DE CALCUL ÉLECTRONIQUE

(30) Priorität: 23.08.2017 DE 102017214748
(43) Veröffentlichungstag der Anmeldung: 27.02.2019
(73) Patentinhaber: Volkswagen Aktiengesellschaft, 38440 Wolfsburg (DE)
(72) Erfinder: Brennecke, Lynn, 38122 Braunschweig (DE); Brandes, Jan, 38179 Schwülper (DE); Hornung, Norman, 38518 Gifhorn (DE)

(56) Entgegenhaltungen:
- EP-A2- 1 726 502
- EP-A2- 1 930 631
- DE-A1- 102007 038 398
- DE-A1- 102010 048 856
- US-A1- 2014 011 632

## Beschreibung

Die Erfindung betrifft ein Verfahren zum Betreiben eines Fahrerassistenzsystems eines Kraftfahrzeugs sowie ein Kraftfahrzeug mit einer elektronischen Recheneinrichtung.

Fahrerassistenzfunktionen eines Fahrerassistenzsystems eines Kraftfahrzeugs, welche nur bei einem eingelegten Gang aktiv sind, benötigen ein Signal zur Erkennung, ob ein Gang eingelegt ist oder ob kein Gang eingelegt ist (Neutralgang). Dabei haben Kraftfahrzeuge mit einem manuellen Getriebe keine eindeutige Erkennung einer Gangwahlhebelposition eines Gangwahlhebels. Es ist somit nicht eindeutig erkennbar, ob das Kraftfahrzeug rollt oder ob das Kraftfahrzeug anfährt. So kann es dazu kommen, dass der Fahrer das Kraftfahrzeug bewusst anfährt, das Fahrerassistenzsystem jedoch davon ausgeht, dass kein Gang eingelegt ist, obwohl ein Gang eingelegt ist. In diesem Fall könnte die Fahrerassistenzfunktion des Fahrerassistenzsystems deaktiviert sein, obwohl der Fahrer eine Unterstützung durch die Fahrerassistenzfunktion benötigt. Eine fehlerhafte Erkennung kann alternativ umgekehrt auftreten. Hierbei kann das Kraftfahrzeug aus einem Stillstand losrollen und das Fahrerassistenzsystem ermitteln, dass ein Gang eingelegt ist. Dies kann dazu führen, dass die Fahrerassistenzfunktion fälschlicherweise aktiviert wird.

Aus der DE 697 22 974 T2 ist ein manuell geschaltetes Kraftfahrzeuggetriebesystem bekannt, welches ein Mittel zum Erfassen einer Getriebeleerlaufbedingung sowie ein Mittel zum Bestimmen einer Vorwärtszielgangstufe aufweist. Auf Grundlage von Drehzahlen einer Eingangswelle und einer Ausgangswelle wird dabei mittels einer Logik ermittelt, ob in dem Getriebe ein Gang eingelegt ist oder ob eine Leerlaufstellung vorliegt.

Darüber hinaus ist aus der DE 102011 007 641 A1 ein Kraftfahrzeug mit einem manuellen Gangwahlhebel, mit einem Handschaltgetriebe, und mit einer über ein Kupplungspedal durch den Fahrer zu betätigenden Kupplung zwischen dem Handschaltgetriebe und dem Antriebsmotor bekannt. Hierbei kann mittels eines Steuergeräts eine Schaltposition ermittelt werden und ein Getriebezustand "Gang eingelegt" erkannt werden.

Weiterhin offenbart die gattungsgemäße DE 10 2005 024 617 A1 ein Verfahren zum Betreiben eines Fahrerassistenzsystems, bei welchem eine Raddrehzahlinformation und eine Kupplungspedalstellungsinformation empfangen werden. Wenn die Information über die Kupplungspedalstellung einen eingekuppelten Zustand repräsentiert, wird mit einer ermittelten Motordrehzahl das Übersetzungsverhältnis bestimmt. Das Übersetzungsverhältnis wiederum dient zum Betreiben des Fahrerassistenzsystems.

Überdies offenbart die EP 1 726 502 A2 ein Verfahren zum Ermitteln eines Übersetzungsverhältnisses bei einem Kraftfahrzeug. Hierbei werden ein eine Drehgeschwindigkeit wenigstens eines Rads des Kraftfahrzeugs repräsentierender erster Drehzahlwert und ein eine Drehgeschwindigkeit eines Motors des Kraftfahrzeugs repräsentierender zweiter Drehzahlwert erfasst. Darüber hinaus wird ein einen Kupplungszustand repräsentierender Wert erfasst. Das Übersetzungsverhältnis wird in Abhängigkeit von den erfassten Drehzahlwerten bestimmt, wenn der den Kupplungszustand repräsentierende Wert den eingekuppelten Zustand anzeigt.

Des Weiteren ist aus der EP 1 930 631 A2 eine Gangpositionsbestimmungsvorrichtung bekannt. Hierbei wird ein in einem Getriebe eingelegter Leerlauf ermittelt, wenn ein in Abhängigkeit von einem Verhältnis zwischen einer Motordrehzahl und einer Fahrzeuggeschwindigkeit geschätzter Gang sich ändert, ohne dass ein Einkuppeln und Auskuppeln eines Gangs erfolgt ist.

Aufgabe der vorliegenden Erfindung ist es, ein Verfahren zum Betreiben eines Fahrerassistenzsystems eines Kraftfahrzeugs sowie ein Kraftfahrzeug mit einerelektronischen Recheneinrichtung zu schaffen, mittels welchen besonders einfach eine Einstellung eines Getriebes des Kraftfahrzeugs ermittelbar ist und in Abhängigkeit davon ein Fahrerassistenzsystem besonders vorteilhaft betreibbar ist.

Diese Aufgabe wird erfindungsgemäß durch ein Verfahren zum Betreiben eines Fahrerassistenzsystems eines Kraftfahrzeugs sowie durch ein Kraftfahrzeug mit einer elektronischen Recheneinrichtung mit den Merkmalen der unabhängigen Patentansprüche gelöst. Vorteilhafte Ausgestaltungen mit zweckmäßigen Weiterbildungen der Erfindung sind in den jeweils abhängigen Ansprüchen sowie in der folgenden Beschreibung angegeben.

Ein erster Aspekt der Erfindung betrifft ein Verfahren zum Betreiben eines Fahrerassistenzsystems eines Kraftfahrzeugs, bei welchem mittels einer elektronischen Recheneinrichtung wenigstens eine Raddrehzahlinformation, welche eine Raddrehzahl zumindest eines Rads des Kraftfahrzeugs charakterisiert, von einer mit dem zumindest einen Rad verbundenen Dreherfassungseinrichtung empfangen wird. Dies bedeutet, dass mittels der Dreherfassungseinrichtung die jeweilige Raddrehzahl zumindest eines Rads des Kraftfahrzeugs ermittelt wird, und als jeweilige Raddrehzahlinformation der elektronischen Recheneinrichtung bereitgestellt wird. Mittels der Raddrehzahlinformation kann ermittelt werden, ob das Kraftfahrzeug sich bewegt, oder ob das Kraftfahrzeug stillsteht. Somit ist ein eine Bewegung des Kraftfahrzeugs charakterisierender Fahrzustand des Kraftfahrzeugs ermittelbar.

Überdies wird mittels der elektronischen Recheneinrichtung abgefragt, ob sich das Kraftfahrzeug im Stillstand befindet oder nicht. Wenn sich das Kraftfahrzeug im Stillstand befindet, wird abgefragt, ob Radticks erfolgen. Wenn in der nächsten Abfrage, die zeitversetzt zur vorangegangenen Abfrage durchgeführt werden kann, ermittelt wird, dass Radticks erfolgen, so wird in Abhängigkeit von der Stellung des Kupplungspedals beziehungsweise einer Kupplungspedalstellungsänderung festgestellt, ob während einer Raddrehzahländerung beziehungsweise einer Fahrzustandsänderung vom Stillstand des Kraftfahrzeugs bis zum Auftreten der Radticks das Kupplungspedal durchgehend in der Obenstellung oder durchgehend in der Untenstellung angeordnet ist. In diesen beiden Fällen wird ermittelt, dass der Leerlauf im Getriebe eingestellt ist. Wenn während der Änderung der Radticks eine Kupplungspedalstellungsänderung von der Untenstellung zu der Obenstellung des Kupplungspedals festgestellt wird, wird abgefragt, ob die Motordrehzahl in einem bestimmten Zeitfenster über einen Schwellenwert ansteigt.

Bei Ermitteln, dass sich das Kraftfahrzeug nicht im Stillstand befindet, wird ermittelt, ob das Kraftfahrzeug rückwärts rollt und das Rückfahrlicht deaktiviert ist, wobei bei Ermittlung, dass das Kraftfahrzeug nicht rückwärts rollt und das Rückfahrlicht nicht deaktiviert ist, abgefragt wird, ob sich das Kupplungspedal in der Unterstellung befindet und dadurch der Leerlauf in dem Getriebe eingestellt ist, wobei wenn die Untenstellung nicht eingestellt ist abgefragt wird, ob die Motordrehzahl in dem bestimmten Zeitfenster über den Schwellenwert ansteigt, wobei bei Ermittlung, dass die Motodrehzahl nicht ansteigt, ermittelt wird, dass der Leerlauf im Getriebe eingestellt ist und bei Ermittlung, dass die Motordrehzahl ansteigt, ermittelt wird, dass ein Gang im Getriebe eingelegt ist.

Bei Ermitteln, dass sich das Kraftfahrzeug nicht im Stillstand befindet und dass das Kraftfahrzeug rückwärts rollt und das Rückfahrlicht deaktiviert ist, wird abgefragt, ob nach Ermittlung des Rückwärtsrollens des Kraftfahrzeugs eine Kupplungspedalstellungsänderung von der Untenstellung in die Obenstellung erfolgt, wobei bei Ermittlung, dass die Kupplungspedalstellungsänderung nicht erfolgt, ermittelt wird, dass der Leerlauf in dem Getriebe eingelegt ist und bei Ermittlung, dass die Kupplungspedalstellungsänderung erfolgt, abgefragt wird, ob infolge der Kupplungspedalstellungsänderung ein Richtungswechsel des Kraftfahrzeugs erfolgt.

Wenn ermittelt wird, das der Richtungswechsel des Kraftfahrzeugs erfolgt, wird ermittelt, dass der Gang in dem Getriebe eingelegt ist und wenn ermittelt wird, dass der Richtungswechsel infolge der Kupplungspedalstellungsänderung erfolgt wird ermittelt, dass der Leerlauf in dem Getriebe eingelegt ist.

Es wird in Abhängigkeit von dem Vergleich das Fahrerassistenzsystem des Kraftfahrzeugs betrieben.

Demnach wird mittels der elektronischen Recheneinrichtung ermittelt, ob das Kraftfahrzeug rückwärts rollt und ein Rückfahrlicht aktiviert ist. Des Weiteren wird mittels der elektronischen Recheneinrichtung wenigstens eine Kupplungspedalstellungsinformation, welche eine Stellung eines Kupplungspedals des Kraftfahrzeugs charakterisiert, von einer Stellungserfassungseinrichtung empfangen. Mit anderen Worten erfasst die Stellungserfassungseinrichtung die Stellung des Kupplungspedals des Kraftfahrzeugs und stellt in Abhängigkeit von der erfassten Stellung des Kupplungspedals die Kupplungspedalstellungsinformation für die elektronische Recheneinrichtung bereit. Bei Empfangen der wenigstens einen Raddrehzahlinformation sowie der wenigstens einen Kupplungspedalstellungsinformation wird mittels der elektronischen Recheneinrichtung zur Ermittlung eines eingestellten Gangs oder eines Leerlaufs des Getriebes des Kraftfahrzeugs die wenigstens eine Raddrehzahlinformation mit der wenigstens einen Kupplungspedalstellungsinformation in Abhängigkeit davon, ob mittels der elektronischen Recheneinrichtung ermittelt worden ist, dass das Kraftfahrzeug rückwärts rollt und das Rückfahrlicht deaktiviert ist oder das Kraftfahrzeug nicht rückwärts rollt und das Rückfahrtlicht aktiviert ist, und unter Einbeziehung einer Raddrehzahländerung verglichen. Anschließend wird mittels der elektronischen Recheneinrichtung in Abhängigkeit von dem Vergleich das Fahrerassistenzsystem des Kraftfahrzeugs betrieben. Mittels der wenigstens einen Raddrehzahlinformation und der wenigstens einen Kupplungspedalstellungsinformation ist beispielsweise über eine Steuerlogik besonders einfach ermittelbar, ob in dem Getriebe des Kraftfahrzeugs der Leerlauf eingestellt ist, oder ob in dem Getriebe der Gang eingelegt ist. Infolge der Ermittlung, ob der Gang in dem Getriebe eingelegt ist, oder das Getriebe in dem Leerlauf betrieben wird, kann das Fahrerassistenzsystem besonders vorteilhaft betrieben werden, da beispielsweise der Fahrer des Kraftfahrzeugs bei dem in dem Getriebe eingelegten Gang auf eine andere Art mittels des Fahrerassistenzsystems unterstützt wird als bei dem in dem Getriebe eingestellten Leerlauf.

In diesem Zusammenhang hat es sich als vorteilhaft erwiesen, wenn mittels der elektronischen Recheneinrichtung in Abhängigkeit von dem Vergleich eine Fahrerassistenzfunktion des Fahrerassistenzsystems bei Ermittlung des eingestellten Gangs aktiviert wird und bei Ermittlung des Leerlaufs deaktiviert wird. Beispielsweise wird eine erste Fahrerassistenzfunktion des Fahrerassistenzsystems bei Ermittlung des eingestellten Gangs aktiviert und bei Ermittlung des Leerlaufs deaktiviert, während eine von der ersten Fahrerassistenzfunktion unterschiedliche, zweite Fahrerassistenzfunktion bei Ermittlung des eingestellten Gangs deaktiviert wird und bei Ermittlung des Leerlaufs aktiviert wird. Der Fahrer des Kraftfahrzeugs kann hierdurch vorteilhafterweise bei einem gesteuerten Fahren des Kraftfahrzeugs mittels des in dem Getriebe eingelegten Gangs durch die erste Fahrerassistenzfunktion unterstützt werden, während der Fahrer bei dem in dem Getriebe eingestellten Leerlauf mittels der zweiten Fahrerassistenzfunktion unterstützt wird. Dies ermöglicht, dass das Fahrerassistenzsystem in Abhängigkeit von einer Entscheidung des Fahrers, den Gang in dem Getriebe einzulegen oder den Leerlauf in dem Getriebe einzustellen, betrieben werden kann.

In weiterer Ausgestaltung der Erfindung hat es sich als vorteilhaft erwiesen, wenn die wenigstens eine Raddrehzahlinformation die jeweilige Raddrehzahl von allen Rädern des Kraftfahrzeugs charakterisiert. Das bedeutet, dass mittels der Dreherfassungseinrichtung sämtliche Drehzahlen jeweiliger Räder des Kraftfahrzeugs ermittelt werden und als die wenigstens eine Raddrehzahlinformation der elektronischen Recheneinrichtung bereitgestellt werden. Dies ermöglicht, dass über die wenigstens eine Raddrehzahlinformation ermittelt werden kann, ob das gesamte Kraftfahrzeug stillsteht oder sich bewegt. Darüber hinaus kann zumindest im Wesentlichen eine fehlerhafte Einschätzung des Fahrzustands des Kraftfahrzeugs vermieden werden, da nicht nur ein Rad des Kraftfahrzeugs, sondern alle Räder des Kraftfahrzeugs bezüglich ihrer jeweiligen Drehzahl in die Ermittlung des Fahrzustands des Kraftfahrzeugs mit einbezogen werden. Würde lediglich die Drehzahl eines Rads des Kraftfahrzeugs erfasst, so könnte der Fahrzustand des Kraftfahrzeugs fehlerhaft ermittelt werden, beispielsweise aufgrund eines In-der-Lufthängens des Rads, sodass dieses sich frei drehen kann, obwohl das Kraftfahrzeug sich nicht bewegt.

Bei einer weiteren vorteilhaften Ausgestaltung der Erfindung ist vorgesehen, dass mittels der elektronischen Recheneinrichtung eine erste Raddrehzahlinformation empfangen wird, welche die Raddrehzahl zumindest eines Rads des Kraftfahrzeugs zu einem ersten Zeitpunkt charakterisiert, und wenigstens eine zweite Raddrehzahlinformation empfangen wird, welche die Raddrehzahl zumindest eines Rads des Kraftfahrzeugs zu einem von dem ersten Zeitpunkt unterschiedlichen, zweiten Zeitpunkt charakterisiert. Das bedeutet, dass mittels der elektronischen Recheneinrichtung anhand der ersten Raddrehzahlinformation der Fahrzustand des Kraftfahrzeugs zu dem ersten Zeitpunkt ermittelt werden kann, und mittels der zweiten Raddrehzahlinformation der Fahrzustand des Kraftfahrzeugs zu dem zweiten Zeitpunkt ermittelt werden kann. Dies ermöglicht ein Ermitteln einer Fahrzustandsänderung des Kraftfahrzeugs zwischen dem ersten Zeitpunkt und dem zweiten Zeitpunkt. Beispielsweise kann das Fahrerassistenzsystem in Abhängigkeit von der Fahrzustandsänderung des Kraftfahrzeugs mittels der elektronischen Recheneinrichtung betrieben werden.

In einer weiteren vorteilhaften Ausgestaltung der Erfindung ist vorgesehen, dass mittels der elektronischen Recheneinrichtung eine erste Kupplungspedalstellungsinformation empfangen wird, welche die Stellung des Kupplungspedals des Kraftfahrzeugs zu einem ersten Zeitpunkt charakterisiert und wenigstens eine zweite Kupplungspedalstellungsinformation empfangen wird, welche die Stellung des Kupplungspedals des Kraftfahrzeugs zu einem von dem ersten Zeitpunkt unterschiedlichen, zweiten Zeitpunkt charakterisiert. Mit anderen Worten wird mittels der elektronischen Recheneinrichtung sowohl die erste Kupplungspedalstellungsinformation als auch die zweite Kupplungspedalstellungsinformation empfangen, wobei die jeweilige Kupplungspedalstellungsinformation die Stellung des Kupplungspedals des Kraftfahrzeugs zu unterschiedlichen Zeitpunkten charakterisiert. Hierdurch ist es möglich, dass mittels der elektronischen Recheneinrichtung eine Kupplungspedalstellungsänderung zwischen dem ersten Zeitpunkt und dem zweiten Zeitpunkt ermittelt wird. Beispielsweise kann das Fahrerassistenzsystem in Abhängigkeit von der Kupplungspedalstellungsänderung zwischen dem ersten Zeitpunkt und dem zweiten Zeitpunkt betrieben werden. Beispielsweise kann das Fahrerassistenzsystem sowohl in Abhängigkeit von einer Änderung der Raddrehzahlinformation und somit der Fahrzustandsänderung als auch in Abhängigkeit von der Kupplungspedalstellungsänderung zwischen den jeweiligen Zeitpunkten betrieben werden, wobei der erste Zeitpunkt der ersten Raddrehzahlinformation mit dem ersten Zeitpunkt der ersten Kupplungspedalinformation entspricht und der zweite Zeitpunkt der zweiten Raddrehzahlinformation dem zweiten Zeitpunkt der zweiten Kupplungspedalstellungsinformation entspricht.

In weiterer Ausgestaltung der Erfindung ist vorgesehen, dass mittels der elektronischen Recheneinrichtung wenigstens eine Richtungsinformation von einer Bewegungssensoreinrichtung des Kraftfahrzeugs empfangen wird. Dabei charakterisiert die wenigstens eine Richtungsinformation eine Bewegungsrichtung des Kraftfahrzeugs, sodass mittels der elektronischen Recheneinrichtung die wenigstens eine Richtungsinformation in den Vergleich miteinbezogen wird. Mit anderen Worten wird mittels der Bewegungssensoreinrichtung die Bewegungsrichtung des Kraftfahrzeugs erfasst und als die Richtungsinformation der elektronischen Recheneinrichtung bereitgestellt. Die elektronische Recheneinrichtung betreibt das Fahrerassistenzsystem in Abhängigkeit von der Richtungsinformation. Die Richtungsinformation kann beispielsweise charakterisieren, ob das Kraftfahrzeug sich nach vorne oder nach hinten bewegt. Darüber hinaus kann mittels der elektronischen Recheneinrichtung eine erste Richtungsinformation empfangen werden, welche die Bewegungsrichtung des Kraftfahrzeugs zu einem ersten Zeitpunkt charakterisiert und wenigstens eine zweite Richtungsinformation empfangen werden, welche die Bewegungsrichtung des Kraftfahrzeugs zu einem von dem ersten Zeitpunkt unterschiedlichen, zweiten Zeitpunkt charakterisiert. Dies ermöglicht eine Ermittlung einer Bewegungsrichtungsänderung des Kraftfahrzeugs zwischen dem ersten Zeitpunkt und dem zweiten Zeitpunkt. Dabei kann die Bewegungsrichtungsänderung zwischen dem ersten Zeitpunkt und dem zweiten Zeitpunkt in den Vergleich miteinbezogen werden und das Fahrerassistenzsystem anschließend in Abhängigkeit von dem Vergleich betrieben werden.

In weiterer vorteilhafter Ausgestaltung der Erfindung ist vorgesehen, dass mittels der elektronischen Recheneinrichtung wenigstens eine Motordrehzahlinformation, welche eine Drehzahl einer Kurbelwelle einer Verbrennungskraftmaschine charakterisiert, von einer Motordrehzahlerfassungseinrichtung empfangen wird, und dass mittels der elektronischen Recheneinrichtung die wenigstens eine Motordrehzahlinformation in den Vergleich miteinbezogen wird. Beispielsweise kann mittels der elektronischen Recheneinrichtung eine erste Motordrehzahlinformation, welche die Drehzahl der Kurbelwelle der Verbrennungskraftmaschine zu einem ersten Zeitpunkt charakterisiert, empfangen werden und eine zweite Motordrehzahlinformation empfangen werden, welche die Drehzahl der Kurbelwelle der Verbrennungskraftmaschine zu einem von dem ersten Zeitpunkt unterschiedlichen, zweiten Zeitpunkt charakterisiert. Dabei wird die jeweilige Drehzahl der Kurbelwelle der Verbrennungskraftmaschine mittels der Motordrehzahlerfassungseinrichtung zu dem jeweiligen Zeitpunkt erfasst und für die elektronische Recheneinrichtung bereitgestellt. Mittels der elektronischen Recheneinrichtung kann in Abhängigkeit von der ersten Motordrehzahlinformation und der zweiten Motordrehzahlinformation eine Motordrehzahländerung der Drehzahl der Kurbelwelle zwischen dem ersten Zeitpunkt und dem zweiten Zeitpunkt ermittelt werden. Anschließend kann mittels der elektronischen Recheneinrichtung das Fahrerassistenzsystem in Abhängigkeit von der Motordrehzahländerung betrieben werden. Beispielsweise kann mittels der elektronischen Recheneinrichtung ein Anstieg oder eine Senkung der Drehzahl der Kurbelwelle zwischen dem ersten Zeitpunkt und dem zweiten Zeitpunkt ermittelt werden und in Abhängigkeit davon über die Steuerlogik der eingestellte Gang oder der Leerlauf des Getriebes ermittelt werden.

Ein zweiter Aspekt der Erfindung betrifft ein Kraftfahrzeug mit einer elektronischen Recheneinrichtung, welche dazu eingerichtet ist, ein Verfahren, wie es bereits im Zusammenhang mit dem erfindungsgemäßen Verfahren beschrieben worden ist, durchzuführen.

Zu der Erfindung gehören auch Weiterbildungen und Vorteile des erfindungsgemäßen Kraftfahrzeugs, die Merkmale aufweisen, wie sie bereits im Zusammenhang mit den Weiterbildungen und Vorteilen des erfindungsgemäßen Verfahrens beschrieben worden sind. Aus diesem Grund sind die entsprechenden Weiterbildungen und Vorteile des erfindungsgemäßen Kraftfahrzeugs hier nicht noch einmal beschrieben.

Im Folgenden ist ein Ausführungsbeispiel der Erfindung beschrieben. Hierzu zeigt:
- Fig. 1: einen ersten Teil eines ersten nicht-erfindungsgemäßen Verfahrensschemas zum Ermitteln, ob bei einem sich anfangs im Stillstand befindenden Kraftfahrzeug von dem Fahrer in einem Getriebe des Kraftfahrzeugs ein Gang oder ein Leerlauf eingestellt worden ist;
- Fig. 2: einen zweiten Teil des ersten Verfahrensschemas, mittels welchem für das sich bewegende Kraftfahrzeug ermittelbar ist, ob in dem Getriebe des Kraftfahrzeugs der Gang oder der Leerlauf eingestellt ist; und
- Fig. 3: ein zu dem in den Fig. 1 und 2 gezeigten ersten Verfahrensschema unterschiedliches, zweites Verfahrensschema zum Ermitteln, ob in dem Getriebe des Kraftfahrzeugs der Gang oder der Leerlauf eingestellt ist.

In den Figuren sind funktionsgleiche Elemente jeweils mit denselben Bezugszeichen versehen.

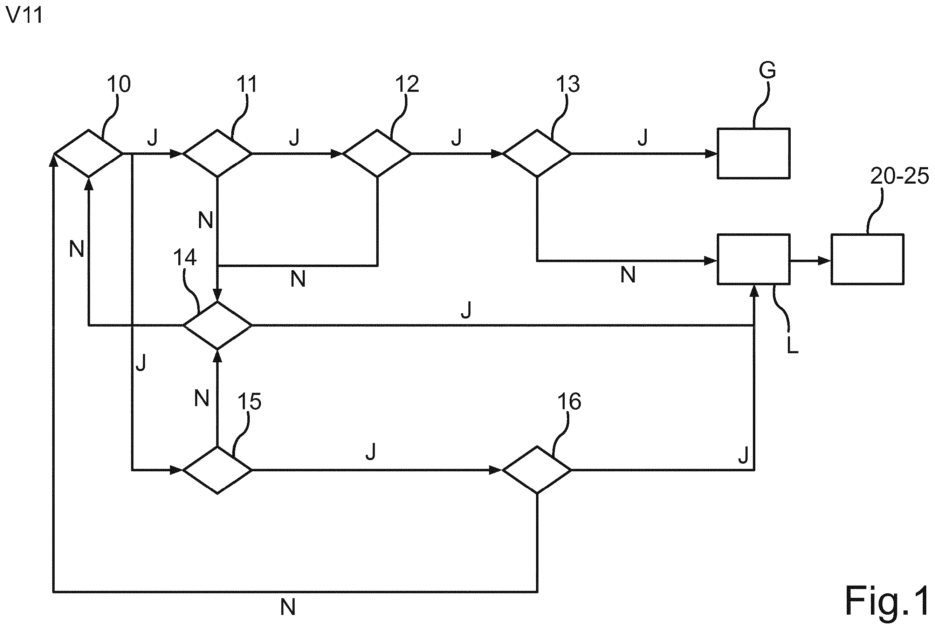

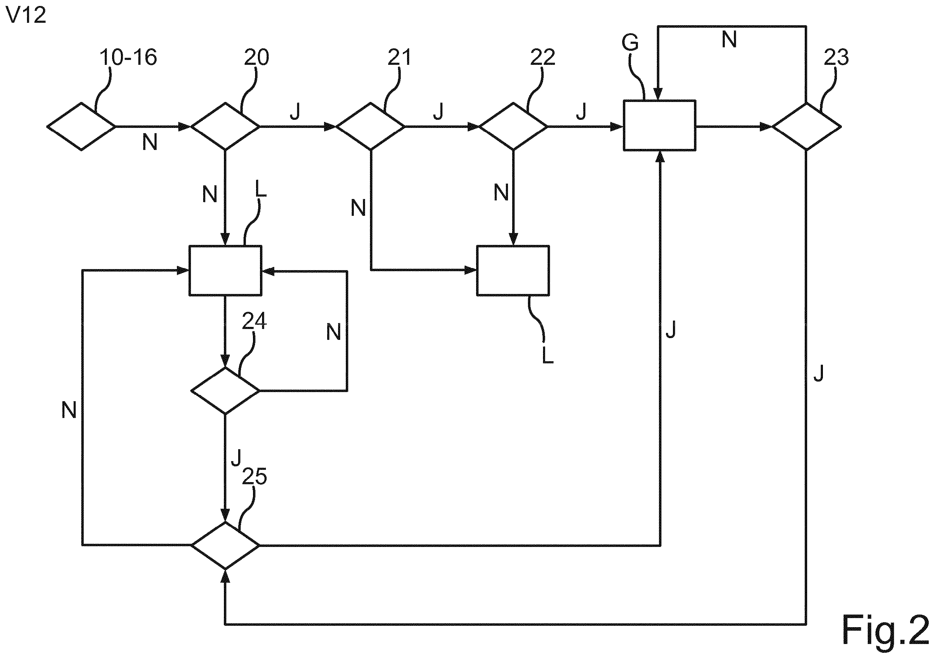

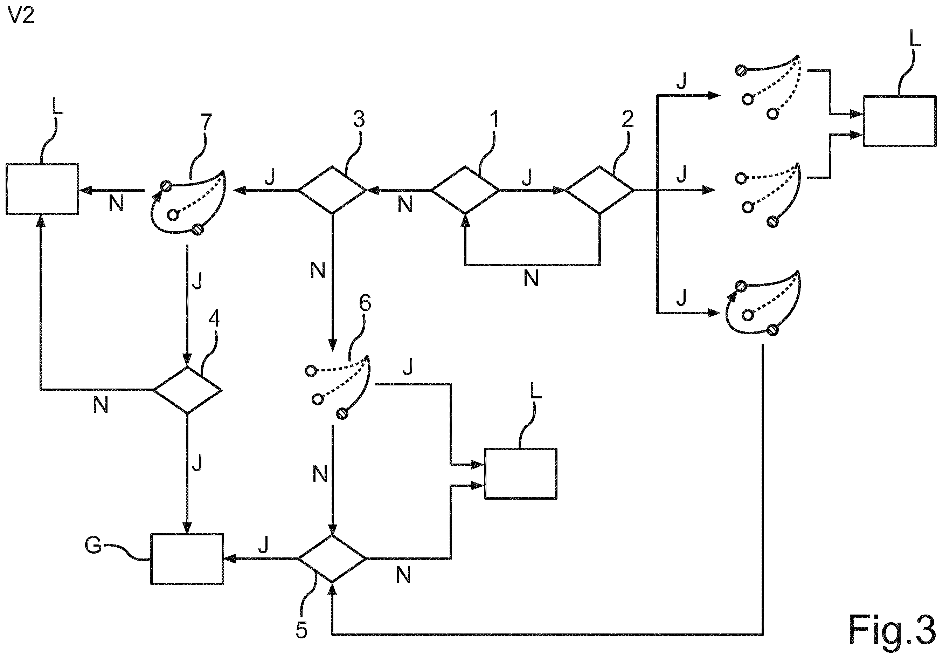

In den Fig. 1 und 2 sind jeweilige Teile V11, V12 eines ersten alternativen Verfahrensschemas dargestellt und in Fig. 3 ist ein zweites Verfahrensschema V2 dargestellt welche jeweils dazu vorgesehen sind eine elektronische Recheneinrichtung eines Kraftfahrzeugs bei einer Ermittlung, ob in einem Getriebe eines Kraftfahrzeugs ein Gang oder ein Leerlauf eingelegt ist, zu unterstützen. Die jeweiligen Verfahrensschemata werden mittels einer Steuerlogik der elektronischen Recheneinrichtung umgesetzt, um ein Fahrerassistenzsystem des Kraftfahrzeugs in Abhängigkeit von dem in dem Getriebe eingestellten Gang oder Leerlauf zu betreiben.

Dabei wird mittels der elektronischen Recheneinrichtung des Kraftfahrzeugs wenigstens eine Raddrehzahlinformation, welche eine Raddrehzahl zumindest eines Rads des Kraftfahrzeugs charakterisiert, von einer mit dem zumindest einen Rad verbundenen Dreherfassungseinrichtung empfangen. Die wenigstens eine Raddrehzahlinformation kann die jeweilige Raddrehzahl von allen Rädern des Kraftfahrzeugs charakterisieren. Des Weiteren wird mittels der elektronischen Recheneinrichtung wenigstens eine Kupplungspedalstellungsinformation, welche eine Stellung eines Kupplungspedals des Kraftfahrzeugs charakterisiert, von einer Stellungserfassungseinrichtung empfangen. Die wenigstens eine Kupplungspedalstellungsinformation charakterisiert eine Obenstellung des Kupplungspedals oder eine Untenstellung des Kupplungspedals oder eine Schleifstellung des Kupplungspedals. Dabei charakterisiert die Obenstellung des Kupplungspedals, dass eine mit dem Kupplungspedal verbundene Kupplung zur Einstellung des Gangs oder des Leerlaufs in dem Getriebe eingekuppelt ist. Die Untenstellung des Kupplungspedals charakterisiert, dass die Kupplung entkoppelt ist und die Schleifstellung des Kupplungspedals charakterisiert eine Zwischenstellung, in welcher die Kupplung weder vollständig eingekuppelt noch vollständig ausgekuppelt ist und eine Kraftübertragung innerhalb der Kupplung mit einem Kupplungsschlupf erfolgt. Die Stellungserfassungseinrichtung kann sowohl die Obenstellung als auch die Untenstellung als auch die Schleifstellung des Kupplungspedals erfassen und die die jeweilige Stellung des Kupplungspedals charakterisierende Kupplungspedalstellungsinformationen für die elektronische Recheneinrichtung bereitstellen. Mittels der elektronischen Recheneinrichtung wird anschließend die wenigstens eine Raddrehzahlinformation mit der wenigstens einen Kupplungspedalstellungsinformation zur Ermittlung des eingestellten Gangs oder des Leerlaufs des Getriebes des Kraftfahrzeugs verglichen und in Abhängigkeit von dem Vergleich das Fahrerassistenzsystem des Kraftfahrzeugs betrieben. Zur Ermittlung eines Anfahrvorgangs infolge des in dem Getriebe eingelegten Gangs oder eines Anrollvorgangs infolge des in dem Getriebe eingelegten Leerlaufs, wird die Stellung des Kupplungspedals sowie eine Auswertung von der die jeweiligen Raddrehzahlen der jeweiligen Räder des Kraftfahrzeugs charakterisierenden Raddrehzahlinformation verwendet. Hier ist zu unterscheiden, ob das Kraftfahrzeug sich im Stillstand befindet oder sich bewegt.

Mittels der elektronischen Recheneinrichtung wird der Vergleich anhand eines der in den Figuren beschriebenen Verfahrensschemata durchgeführt. Auf die in den Figuren dargestellten Verfahrensschemata wird später näher eingegangen.

Mittels der elektronischen Recheneinrichtung kann in Abhängigkeit von dem Vergleich eine Fahrerassistenzfunktion des Fahrerassistenzsystems bei Ermittlung des eingestellten Gangs aktiviert und bei Ermittlung des Leerlaufs deaktiviert werden. Für den Vergleich kann zusätzlich eine Raddrehzahländerung beziehungsweise eine Fahrzustandsänderung und/oder eine Kupplungspedalstellungsänderung und/oder eine Richtungsänderung und/oder eine Motordrehzahländerung miteinbezogen werden. Dabei ist unter den jeweiligen Änderungen eine Änderung eines jeweiligen Betriebsparameters von einem ersten Zeitpunkt im Vergleich zu einem von dem ersten Zeitpunkt unterschiedlichen, zweiten Zeitpunkt zu verstehen. Die jeweiligen Betriebsparameter beschreiben eine Raddrehzahl zumindest eines Rads des Kraftfahrzeugs beziehungsweise zumindest eine Stellung eines Kupplungspedals des Kraftfahrzeugs beziehungsweise zumindest eine Bewegungsrichtung des Kraftfahrzeugs beziehungsweise zumindest eine Drehzahl einer Kurbelwelle einer Verbrennungskraftmaschine des Kraftfahrzeugs.

In Fig. 1 ist ein erster Teil V11 dargestellt, welcher von einem Stillstand des Kraftfahrzeugs ausgeht. Dass bedeutet, dass die Steuerlogik, mittels welcher die elektronische Recheneinrichtung den eingestellten Gang oder den eingestellten Leerlauf des Getriebes des Kraftfahrzeugs ermittelt, mit dem ersten Teil V11 des ersten Verfahrensschemas startet, sofern von einem Stillstand des Kraftfahrzeugs ausgegangen wird. In einem ersten Verfahrensschritt 10 wird gefragt, ob sich das Kraftfahrzeug in einem Stillstand befindet. Wird beispielsweise mittels einer Bewegungssensoreinrichtung des Kraftfahrzeugs eine Richtungsinformation für die elektronische Recheneinrichtung bereitgestellt, wobei die Richtungsinformation einen Stillstand des Kraftfahrzeugs charakterisiert, so ermittelt die elektronische Recheneinrichtung den Stillstand des Kraftfahrzeugs. Wird der Stillstand von der elektronischen Recheneinrichtung ermittelt, so folgt die Steuerlogik einem mit J für "ja" bezeichneten Logikpfeil zu einem zweiten Verfahrensschritt 11 oder zu einem sechsten Verfahrensschritt 15.

In dem zweiten Verfahrensschritt 11 wird bei ermitteltem Stillstand abgefragt, ob das Kupplungspedal in der Untenstellung angeordnet ist. Empfängt die elektronische Recheneinrichtung von der Stellungserfassungseinrichtung die Kupplungspedalstellungsinformation, welche charakterisiert, dass das Kupplungspedal in der Untenstellung angeordnet ist, so folgt die Steuerlogik dem mit J für "ja" bezeichneten Logikpfeil zu einem dritten Verfahrensschritt 12, in welchem abgefragt wird, ob das Kupplungspedal die Untenstellung verlässt und somit eine Kupplungspedalstellungsänderung erfolgt. Wird ein Verlassen der Untenstellung ermittelt, so folgt die Steuerlogik dem mit J bezeichneten Logikpfeil zu einem vierten Verfahrensschritt 13. In dem vierten Verfahrensschritt 13 wird abgefragt, ob zuerst eine definierte Anzahl an erforderlichen Radticks hinsichtlich einer vorbestimmten Raddrehzahl erreicht wird oder zuerst das Kupplungspedal in der Obenstellung angeordnet ist. Wird zuerst die definierte Anzahl an erforderlichen Radticks hinsichtlich der vorbestimmten Raddrehzahl erreicht (Anzahl Radticks = True) bevor das Kupplungspedal in der Obenstellung angeordnet ist, so folgt die Steuerlogik dem mit J bezeichneten Logikpfeil, und es wird von der elektronischen Recheneinrichtung ermittelt, dass das Kraftfahrzeug fährt und der Gang G eingelegt ist. Wird in dem vierten Verfahrensschritt 13 festgestellt, dass zwischen einem Verlassen der Untenstellung und einem Erreichen der Obenstellung des Kupplungspedals eine definierte Anzahl erforderlicher Radticks nicht erreicht wurde (Anzahl Radticks = False), so folgt die Steuerlogik dem mit N für "nein" bezeichneten Logikpfeil und es wird von der elektronischen Recheneinrichtung ermittelt, dass kein Gang und somit der Leerlauf L im Getriebe eingestellt ist.

Wird im zweiten Verfahrensschritt 11 festgestellt, dass die Untenstellung des Kupplungspedals nicht erreicht ist, so folgt die Steuerlogik dem mit N für "nein" gekennzeichneten Logikpfeil zum fünften Verfahrensschritt 14. Wird im dritten Verfahrensschritt 12 festgestellt, dass das Kupplungspedal die Untenstellung nicht verlässt, so folgt die Steuerlogik dem mit N für "nein" bezeichneten Logikpfeil und landet ebenfalls beim fünften Verfahrensschritt 14. Im fünften Verfahrensschritt 14 wird abgefragt ob Radticks erfolgen und somit das wenigstens eine über die Raddrehzahlinformation charakterisierte Rad des Kraftfahrzeugs eine Raddrehzahl von größer als 0 aufweist. Wird mittels der elektronsichen Recheneinrichtung ermittelt, dass keine Radticks erfolgen, so folgt die Steuerlogik dem mit N für "nein" gekennzeichneten Logikpfeil zum ersten Verfahrensschritt 10. Wird mittels der Steuerlogik ermittelt, dass Radticks erfolgen, so folgt die Steuerlogik dem mit J für "ja" gekennzeichneten Logikpfeil und die elektronische Recheneinrichtung ermittelt, dass kein Gang, sondern der Leerlauf L in dem Getriebe eingestellt ist.

Wird mittels der Steuerlogik in dem ersten Verfahrensschritt 10 ermittelt, dass sich das Kraftfahrzeug im Stillstand befindet, so kann die Steuerlogik dem mit J für "ja" gekennzeichneten Logikpfeil zum sechsten Verfahrensschritt 15 statt zum zweiten Verfahrensschritt 11 folgen. Im sechsten Verfahrensschritt 15 wird abgefragt, ob die Obenstellung des Kupplungspedals erreicht ist. Ist die Obenstellung des Kupplungspedals nicht erreicht, so folgt die Steuerlogik dem mit N für "nein" bezeichneten Logikpfeil zum fünften Verfahrensschritt 14. Stellt die elektronische Recheneinrichtung fest, dass die Obenstellung des Kupplungspedals erreicht ist, so folgt die Steuerlogik dem mit J für "ja" bezeichneten Logikpfeil zum siebten Verfahrensschritt 16, in welchem abgefragt wird, ob Radticks erfolgen. Wird mittels der elektronischen Recheneinrichtung festgestellt, dass keine Radticks erfolgen, so folgt die Steuerlogik dem mit N für "nein" gekennzeichneten Logikpfeil zum ersten Verfahrensschritt 10. Wird im siebten Verfahrensschritt 16 ermittelt, dass Radticks erfolgen, so folgt die Steuerlogik dem mit J für "ja" gekennzeichneten Logikpfeil und die elektronische Recheneinrichtung ermittelt, dass kein Gang, sondern der Leerlauf L in dem Getriebe eingelegt ist. Wird von der elektronischen Recheneinrichtung ermittelt, dass der Leerlauf im Getriebe eingelegt ist, und die Bewegungssensoreinrichtung des Kraftfahrzeugs ermittelt eine Bewegung des Kraftfahrzeugs, so folgt die Steuerlogik dem Logikpfeil zum zweiten Teil des ersten Verfahrensschemas V12. Alternativ oder zusätzlich kann die Steuerlogik nach dem ersten Verfahrensschritt 10 einem nicht dargestellten Logikpfeil zum zweiten Teil V12 des ersten Verfahrensschemas folgen, soweit von der elektronischen Recheneinrichtung festgestellt wird, dass sich das Kraftfahrzeug nicht im Stillstand befindet.

Wird mittels der elektronischen Recheneinrichtung ermittelt, dass sich das Kraftfahrzeug nicht im Stillstand befindet, so folgt die Steuerlogik dem zweiten Teil V12 des ersten Verfahrensschemas. Der zweite Teil V12 des ersten Verfahrensschemas beginnt mit einem achten Verfahrensschritt 20, in welchem abgefragt wird, ob das Kraftfahrzeug rückwärts rollt und das Rückfahrlicht des Kraftfahrzeugs ausgeschaltet ist. Ermittelt die elektronische Recheneinrichtung, dass das Kraftfahrzeug rückwärts rollt und das Rückfahrlicht ausgeschaltet ist, so folgt die Steuerlogik dem mit J für "ja" gekennzeichneten Logikpfeil zu einem neunten Verfahrensschritt 21, in welchem abgefragt wird, ob das Kupplungspedal in der Schleifstellung angeordnet ist. Wird mittels der elektronischen Recheneinrichtung ermittelt, dass sich das Kupplungspedal nicht in der Schleifstellung befindet, so folgt die Steuerlogik dem mit N für "nein" gekennzeichneten Logikpfeil und ermittelt, dass sich das Fahrzeug rückwärts in einem Rollvorgang bewegt und somit der Leerlauf L in dem Getriebe eingestellt ist. Ermittelt die elektronische Recheneinrichtung, dass die Schleifstellung des Kupplungspedals eingestellt ist, so folgt die Steuerlogik dem mit J für "ja" gekennzeichneten Logikpfeil zu einem zehnten Verfahrensschritt 22, in welchem abgefragt wird, ob ein Bewegungsrichtungswechsel des Kraftfahrzeugs vorliegt und dieses sich nun vorwärts bewegt. Wird mittels der elektronischen Recheneinrichtung ermittelt, dass der Bewegungsrichtungswechsel nicht vorliegt, so folgt die Steuerlogik dem mit N für "nein" gekennzeichneten Logikpfeil und die elektronische Recheneinrichtung ermittelt, dass der Leerlauf L in dem Getriebe eingestellt ist. Ermittelt die elektronische Recheneinrichtung hingegen, dass der Bewegungsrichtungswechsel vorliegt, so folgt die Steuerlogik dem mit J für "ja" gekennzeichneten Logikpfeil und die elektronische Recheneinrichtung ermittelt, dass das Kraftfahrzeug anfährt und somit der Gang G in dem Getriebe eingelegt ist.

Wird in dem achten Verfahrensschritt 20 festgestellt, dass das Kraftfahrzeug nicht rückwärts rollt, so folgt die Steuerlogik dem mit N für "nein" gekennzeichneten Logikpfeil und die elektronische Recheneinrichtung ermittelt, dass das Kraftfahrzeug vorwärts rollt und somit der Leerlauf L in dem Getriebe eingestellt ist. Wird anschließend in einem elften Verfahrensschritt 24, in welchem abgefragt wird, ob die Untenstellung des Kupplungspedals eingestellt ist, von der elektronischen Recheneinrichtung ermittelt, dass die Untenstellung des Kupplungspedals nicht erreicht ist, so folgt die Steuerlogik dem mit N für "nein" gekennzeichneten Logikpfeil und die elektronische Recheneinrichtung stellt fest, dass der Leerlauf L in dem Getriebe eingestellt ist. Ermittelt die elektronische Recheneinrichtung in dem elften Verfahrensschritt 24, dass die Untenstellung des Kupplungspedals erreicht ist, so folgt die Steuerlogik dem mit J für "ja" gekennzeichneten Logikpfeil zum zwölften Verfahrensschritt 25, in welchem abgefragt wird, ob eine Motordrehzahl über einen Schwellenwert in einem bestimmten Zeitfenster ansteigt und die Schleifstellung des Kupplungspedals erreicht ist. Steigt die Motordrehzahl in dem bestimmten Zeitfenster nicht über den Schwellenwert an und die Schleifstellung des Kupplungspedals ist nicht erreicht, so folgt die Steuerlogik dem mit N für "nein" gekennzeichneten Logikpfeil und die elektronische Recheneinrichtung stellt fest, dass der Leerlauf L in dem Getriebe eingelegt ist. Wird mittels der elektronischen Recheneinrichtung ermittelt, dass die Motordrehzahl über den Schwellenwert in dem bestimmten Zeitfenster ansteigt und die Schleifstellung des Kupplungspedals erreicht ist, so folgt die Steuerlogik dem mit J für "ja" bezeichneten Logikpfeil und die elektronische Recheneinrichtung ermittelt, dass der Gang G in dem Getriebe eingelegt ist. Nach Ermittlung des in dem Getriebe eingelegten Gangs G kann mittels der Steuerlogik in einem dreizehnten Verfahrensschritt 23 abgefragt werden, ob die Untenstellung des Kupplungspedals erreicht ist. Wird mittels der elektronischen Recheneinrichtung ermittelt, dass die Untenstellung des Kupplungspedals nicht erreicht ist, so folgt die Steuerlogik dem mit N für "nein" bezeichneten Logikpfeil und ermittelt, dass der Gang G in dem Getriebe eingelegt ist. Ermittelt die elektronische Recheneinrichtung in dem dreizehnten Verfahrensschritt 23, dass die Untenstellung des Kupplungspedals erreicht ist, so folgt die Steuerlogik dem mit J für "ja" bezeichneten Logikpfeil zum zwölften Verfahrensschritt 25.

Befindet sich das Kraftfahrzeug in einem ersten Fall in dem Stillstand, so kann mittels der elektronischen Recheneinrichtung anhand des Fahrzustands beziehungsweise der Raddrehzahlinformation der Stillstand des Kraftfahrzeugs ermittelt werden. Befindet sich das Kupplungspedal in der Untenstellung, kann ein bevorzugter Gang von dem Fahrer über einen Gangwahlhebel des vorliegend mechanischen Getriebes eingelegt werden. Erfolgt direkt nach einem Lösen der Kupplung, bei welchem die Untenstellung des Kupplungspedals verlassen wird, eine Fahrzeugbewegung, so ist der Gang in dem Getriebe eingelegt. Zusätzlich wird eine notwendige definierte Anzahl an Radticks, vorliegend Radticks von allen vier Rädern des Kraftfahrzeugs, ausgewertet. Sobald diese notwendige Anzahl an Radticks erreicht ist, wird von einem Anfahrvorgang des Kraftfahrzeugs ausgegangen. Das Fahrerassistenzsystem wird mittels der elektronischen Recheneinrichtung aktiviert und kann den Fahrer unterstützen. Erreicht das Kupplungspedal die Obenstellung und es werden weniger als die notwendige definierte Anzahl an Radticks erkannt, kann davon ausgegangen werden, dass in dem Getriebe kein Gang G eingelegt ist und in dem Getriebe der Leerlauf L eingelegt ist. Alle darauffolgenden Fahrzeugbewegungen ohne Bewegung des Kupplungspedals beziehungsweise ohne Kupplungspedalstellungsänderung erfolgen ohne einen eingelegten Gang. Das Kraftfahrzeug befindet sich somit in dem Anrollgang beziehungsweise in einem Abschleppvorgang. Das Fahrerassistenzsystem ist vorliegend hierbei mittels der elektronischen Recheneinrichtung deaktiviert.

Rollt das Kraftfahrzeug in einem zweiten Fall, so kann mittels der elektronischen Recheneinrichtung eine Bewegung des Kraftfahrzeugs erkannt werden. Befindet sich das Kupplungspedal in der Schleifstellung und das Kraftfahrzeug ändert seine Bewegungsrichtung, ist der Gang G in dem Getriebe eingelegt. Für eine Detektion der Bewegungsrichtung werden richtungsgebende Sensoren verwendet. Zusätzlich kann hier ein Anstieg der Motordrehzahl ebenfalls überwacht werden.

Insbesondere erfolgen die einzelnen Verfahrensschritte des ersten Verfahrensschemas zumindest teilweise zeitlich versetzt und somit zu unterschiedlichen Zeitpunkten.

In Fig. 3 ist ein Verfahrensschema V2 für eine erfindungsgemäße Führung der Steuerlogik dargestellt. Hierbei wird in einer ersten Abfrage 1 abgefragt, ob sich das Kraftfahrzeug in dem Stillstand befindet. Ermittelt die elektronische Recheneinrichtung, dass sich das Kraftfahrzeug in dem Stillstand befindet, so folgt die Steuerlogik dem mit dem J für "ja" gekennzeichneten Logikpfeil zu einer zweiten Abfrage 2. In der zweiten Abfrage 2 wird abgefragt, ob Radticks erfolgen. Wird mittels der elektronischen Recheneinrichtung festgestellt, dass keine Radticks erfolgen, so folgt die Steuerlogik dem mit N für "nein" bezeichneten Logikpfeil zur ersten Abfrage 1. Wird in der zweiten Abfrage 2, die hier zeitversetzt zur ersten Abfrage 1 durchgeführt werden kann, mittels der elektronischen Recheneinrichtung ermittelt, dass Radticks erfolgen, so folgt die Steuerlogik einem der mit J für "ja" bezeichneten Logikpfeile in Abhängigkeit von der Stellung des Kupplungspedals beziehungsweise einer Kupplungspedalstellungsänderung. Wird mittels der elektronischen Recheneinrichtung festgestellt, dass während einer Raddrehzahländerung beziehungsweise einer Fahrzustandsänderung von dem Stillstand des Kraftfahrzeugs zu dem Auftreten der Radticks das Kupplungspedal durchgehend in der Obenstellung oder durchgehend in der Untenstellung angeordnet ist, so ermittelt die elektronische Recheneinrichtung, dass der Leerlauf L in dem Getriebe eingestellt ist. Ermittelt die elektronische Recheneinrichtung, dass während der Änderung der Radticks eine Kupplungspedalstellungsänderung von der Untenstellung des Kupplungspedals zu der Obenstellung des Kupplungspedals erfolgt ist, so folgt die Steuerlogik dem Logikpfeil zu einer fünften Abfrage 5, welche später näher erläutert wird.

Wird in der ersten Abfrage 1 mittels der elektronischen Recheneinrichtung ermittelt, dass sich das Kraftfahrzeug nicht im Stillstand befindet, so folgt die Steuerlogik dem mit N für "nein" gekennzeichneten Logikpfeil zu einer dritten Abfrage 3. In der dritten Abfrage 3 wird abgefragt, ob das Kraftfahrzeug rückwärts rollt und das Rückfahrlicht deaktiviert ist. Ermittelt die elektronische Recheneinrichtung, dass das Kraftfahrzeug nicht rückwärts rollt und das Rückfahrlicht nicht deaktiviert ist, so folgt die Steuerlogik dem mit N für "nein" bezeichneten Logikpfeil zu einer sechsten Abfrage 6, in welcher abgefragt wird, ob sich das Kupplungspedal in der Untenstellung befindet. Mit dieser Negierung fallen zwei weitere Fälle weg. Der erste Fall, welcher wegfällt ist, dass das Kraftfahrzeug vorwärts rollt, ohne dass ein Rückwärtsgang eingelegt ist. Der zweite Fall, welcher wegfällt ist, dass das Kraftfahrzeug rückwärts rollt und der Rückwärtsgang eingelegt ist. Wird mittels der elektronischen Recheneinrichtung festgestellt, dass sich das Kupplungspedal in der Untenstellung befindet, so folgt die Steuerlogik dem mit J für "ja" gekennzeichneten Logikpfeil und die elektronische Recheneinrichtung ermittelt, dass der Leerlauf L in dem Getriebe eingestellt ist. Ermittelt die elektronische Recheneinrichtung in der sechsten Abfrage 6 hingegen, dass die Untenstellung des Kupplungspedals nicht eingestellt ist, so folgt die Steuerlogik dem mit N für "nein" bezeichneten Logikpfeil zur fünften Abfrage 5. In der fünften Abfrage 5 wird abgefragt, ob die Motordrehzahl in dem bestimmten Zeitfenster über den Schwellenwert ansteigt. Ermittelt die elektronische Recheneinrichtung, dass die Motordrehzahl in dem bestimmten Zeitfenster nicht über den Schwellenwert ansteigt, so folgt die Steuerlogik dem mit N für "nein" bezeichneten Logikpfeil und die elektronische Recheneinrichtung stellt fest, dass der Leerlauf L in dem Getriebe eingestellt ist. Ermittelt die elektronische Recheneinrichtung hingegen infolge der fünften Abfrage 5, dass die Motordrehzahl in dem bestimmten Zeitfenster über den Schwellenwert ansteigt, so folgt die Steuerlogik dem mit J für "ja" bezeichneten Logikpfeil und die elektronische Recheneinrichtung ermittelt, dass der Gang G in dem Getriebe eingelegt ist.

Ermittelt die elektronische Recheneinrichtung in der dritten Abfrage 3, dass das Fahrzeug rückwärts rollt und das Rückfahrlicht deaktiviert ist, so folgt die Steuerlogik dem mit J für "ja" bezeichneten Logikpfeil zu einer siebten Abfrage 7, in welcher abgefragt wird, ob nach Ermittlung des Rückwärtsrollens des Kraftfahrzeugs eine Kupplungspedalstellungsänderung von der Untenstellung in die Obenstellung erfolgt. Ermittelt die elektronische Recheneinrichtung, dass die Kupplungspedalstellungsänderung nicht erfolgt, so folgt die Steuerlogik dem mit N für "nein" bezeichneten Logikpfeil und die elektronische Recheneinrichtung ermittelt, dass der Leerlauf L in dem Getriebe eingelegt ist. Ermittelt die elektronische Recheneinrichtung infolge der siebten Abfrage 7, dass die Kupplungspedalstellungsänderung erfolgt, so folgt die Steuerlogik dem mit J für "ja" bezeichneten Logikpfeil zu einer vierten Abfrage 4. In der vierten Abfrage 4 wird abgefragt, ob infolge der Kupplungspedalstellungsänderung ein Richtungswechsel des Kraftfahrzeugs erfolgt. Wird mittels der elektronischen Recheneinrichtung ermittelt, dass der Richtungswechsel des Kraftfahrzeugs erfolgt, so folgt die Steuerlogik dem mit J für "ja" bezeichneten Logikpfeil und die elektronische Recheneinrichtung ermittelt, dass der Gang G in dem Getriebe eingelegt ist. Ermittelt die elektronische Recheneinrichtung hingegen, dass der Richtungswechsel infolge der Kupplungspedalstellungsänderung erfolgt, so folgt die Steuerlogik dem mit N für "nein" bezeichneten Logikpfeil und die elektronische Recheneinrichtung ermittelt, dass der Leerlauf L in dem Getriebe eingelegt ist. Die jeweiligen, dem zweiten Verfahrensschema zugeordneten Abfragen können zumindest teilweise zeitversetzt erfolgen.

Insgesamt zeigt das Beispiel, wie durch die Erfindung eine Unterscheidung zwischen einem Anfahren und einem Anrollen in Kraftfahrzeugen mit einem Handschaltgetriebe erfolgen kann.

### Bezugszeichenliste

- 1: erste Abfrage
- 2: zweite Abfrage
- 3: dritte Abfrage
- 4: vierte Abfrage
- 5: fünfte Abfrage
- 6: sechste Abfrage
- 7: siebte Abfrage
- 10: erster Verfahrensschritt
- 11: zweiter Verfahrensschritt
- 12: dritter Verfahrensschritt
- 13: vierter Verfahrensschritt
- 14: fünfter Verfahrensschritt
- 15: sechster Verfahrensschritt
- 16: siebter Verfahrensschritt
- 20: achter Verfahrensschritt
- 21: neunter Verfahrensschritt
- 22: zehnter Verfahrensschritt
- 23: dreizehnter Verfahrensschritt
- 24: elfter Verfahrensschritt
- 25: zwölfter Verfahrensschritt
- L: Leerlauf
- G: Gang
- V11: erster Teil eines ersten Verfahrensschemas
- V12: zweiter Teil des ersten Verfahrensschemas
- V2: zweites Verfahrensschema

## Patentansprüche

1. Verfahren zum Betreiben eines Fahrerassistenzsystems eines Kraftfahrzeugs, bei welchem mittels einer elektronischen Recheneinrichtung
- wenigstens eine Raddrehzahlinformation, welche eine Raddrehzahl zumindest eines Rads des Kraftfahrzeugs charakterisiert, von einer mit dem zumindest einen Rad verbundenen Dreherfassungseinrichtung empfangen wird;
- abgefragt wird, ob sich das Kraftfahrzeug in dem Stillstand befindet oder nicht, und wenn sich das Kraftfahrzeug im Stillstand befindet,
- in der nächsten Abfrage, die zeitversetzt zur vorangegangenen Abfrage durchgeführt werden kann, abgefragt wird, ob Radticks erfolgen,
- und wenn ermittelt wird, dass Radticks erfolgen, so wird in Abhängigkeit von der Stellung des Kupplungspedals beziehungsweise einer Kupplungspedalstellungsänderung festgestellt, ob während einer Raddrehzahländerung beziehungsweise einer Fahrzustandsänderung von dem Stillstand des Kraftfahrzeugs zu dem Auftreten der Radticks das Kupplungspedal durchgehend in der Obenstellung oder durchgehend in der Untenstellung angeordnet ist, und in diesen beiden Fällen ermittelt, dass der Leerlauf in dem Getriebe eingestellt ist, und wenn während der Änderung der Radticks eine Kupplungspedalstellungsänderung von der Untenstellung des Kupplungspedals zu der Obenstellung des Kupplungspedals festgestellt wird, abgefragt wird, ob die Motordrehzahl in einem bestimmten Zeitfenster über einen Schwellenwert ansteigt,
- wobei bei Ermitteln, dass sich das Kraftfahrzeug nicht im Stillstand befindet, ermittelt wird, ob das Kraftfahrzeug rückwärts rollt und das Rückfahrlicht deaktiviert ist, wobei bei Ermittlung, dass das Kraftfahrzeug nicht rückwärts rollt und das Rückfahrlicht nicht deaktiviert ist, abgefragt wird, ob sich das Kupplungspedal in der Unterstellung befindet und dadurch der Leerlauf in dem Getriebe eingestellt ist, wobei wenn die Untenstellung nicht eingestellt ist abgefragt wird, ob die Motordrehzahl in dem bestimmten Zeitfenster über den Schwellenwert ansteigt, wobei bei Ermittlung, dass die Motodrehzahl nicht ansteigt, ermittelt wird, dass der Leerlauf im Getriebe eingestellt ist und bei Ermittlung, dass die Motordrehzahl ansteigt, ermittelt wird, dass ein Gang im Getriebe eingelegt ist,
- wobei bei Ermitteln, dass sich das Kraftfahrzeug nicht im Stillstand befindet und dass das Kraftfahrzeug rückwärts rollt und das Rückfahrlicht deaktiviert ist, abgefragt wird, ob nach Ermittlung des Rückwärtsrollens des Kraftfahrzeugs eine Kupplungspedalstellungsänderung von der Untenstellung in die Obenstellung erfolgt, wobei bei Ermittlung, dass die Kupplungspedalstellungsänderung nicht erfolgt, ermittelt wird, dass der Leerlauf in dem Getriebe eingelegt ist und bei Ermittlung, dass die Kupplungspedalstellungsänderung erfolgt, abgefragt wird, ob infolge der Kupplungspedalstellungsänderung ein Richtungswechsel des Kraftfahrzeugs erfolgt,
- wobei wenn ermittelt wird, das der Richtungswechsel des Kraftfahrzeugs erfolgt, ermittelt wird, dass der Gang in dem Getriebe eingelegt ist und wenn ermittelt wird, dass der Richtungswechsel infolge der Kupplungspedalstellungsänderung erfolgt ermittelt wird, dass der Leerlauf in dem Getriebe eingelegt ist;
- in Abhängigkeit von dem Vergleich das Fahrerassistenzsystem des Kraftfahrzeugs betrieben wird.

2. Verfahren nach Anspruch 1,
**dadurch gekennzeichnet, dass**
mittels der elektronischen Recheneinrichtung in Abhängigkeit von dem Vergleich eine Fahrassistenzfunktion des Fahrerassistenzsystems bei Ermittlung des eingestellten Gangs aktiviert wird und bei Ermittlung des Leerlaufs deaktiviert wird.

3. Verfahren nach Anspruch 1 oder 2,
**dadurch gekennzeichnet, dass**
die wenigstens eine Raddrehzahlinformation die jeweilige Raddrehzahl von allen Rädern des Kraftfahrzeugs charakterisiert.

4. Verfahren nach einem der vorhergehenden Ansprüche,
**dadurch gekennzeichnet, dass**
mittels der elektronischen Recheneinrichtung eine erste Raddrehzahlinformation empfangen wird, welche die Raddrehzahl zumindest eines Rads des Kraftfahrzeugs zu einem ersten Zeitpunkt charakterisiert, und wenigstens eine zweite Raddrehzahlinformation empfangen wird, welche die Raddrehzahl zumindest eines Rads des Kraftfahrzeugs zu einem von dem ersten Zeitpunkt unterschiedlichen zweiten Zeitpunkt charakterisiert.

5. Verfahren nach einem der vorhergehenden Ansprüche,
**dadurch gekennzeichnet, dass**
mittels der elektronischen Recheneinrichtung eine erste Kupplungspedalstellungsinformation empfangen wird, welche die Stellung des Kupplungspedals des Kraftfahrzeugs zu einem ersten Zeitpunkt charakterisiert und wenigstens eine zweite Kupplungspedalstellungsinformation empfangen wird, welche die Stellung des Kupplungspedals des Kraftfahrzeugs zu einem von dem ersten Zeitpunkt unterschiedlichen zweiten Zeitpunkt charakterisiert.

6. Verfahren nach einem der vorhergehenden Ansprüche,
**dadurch gekennzeichnet, dass**
mittels der elektronischen Recheneinrichtung wenigstens eine Richtungsinformation von einer Bewegungssensoreinrichtung des Kraftfahrzeugs empfangen wird, wobei die wenigstens eine Richtungsinformation eine Bewegungsrichtung des Kraftfahrzeugs charakterisiert.

7. Verfahren nach einem der vorhergehenden Ansprüche,
**dadurch gekennzeichnet, dass**
mittels der elektronischen Recheneinrichtung wenigstens eine Motordrehzahlinformation, welche eine Drehzahl einer Kurbelwelle einer Verbrennungskraftmaschine charakterisiert, von einer Motordrehzahlerfassungseinrichtung empfangen wird.

8. Kraftfahrzeug mit einer elektronischen Recheneinrichtung, welche dazu eingerichtet ist, ein Verfahren nach einem der Ansprüche 1 bis 7 durchzuführen.

## Claims

1. Method for operating a driver assistance system of a motor vehicle, in which, by means of an electronic computing device,
- at least one piece of wheel speed information characterizing a wheel speed of at least one wheel of the motor vehicle is received from a rotation detection device connected to the at least one wheel;
- it is queried whether the motor vehicle is at a standstill or not, and, if the motor vehicle is at a standstill,
- in the next query operation, which can be carried out at a later time than the previous query operation, it is queried whether wheel ticks are occurring,
- and if it is determined that wheel ticks are occurring, it is thus identified, depending on the position of the clutch pedal or a change in the position of the clutch pedal, whether the clutch pedal is continuously in the up position or continuously in the down position during a change in wheel speed or a change in driving state from the motor vehicle being at a standstill to the occurrence of wheel ticks, and in these two cases it is determined that neutral is selected in the transmission, and if a change in the position of the clutch pedal from the down position of the clutch pedal to the up position of the clutch pedal is identified during the change in wheel ticks, it is queried whether there is an increase in engine speed above a threshold value in a specific time window,
- wherein, upon determining that the motor vehicle is not at a standstill, it is determined whether the motor vehicle is rolling backwards and the reversing light is deactivated, wherein, upon determining that the motor vehicle is not rolling backwards and the reversing light is not deactivated, it is queried whether the clutch pedal is in the down position and thus neutral is selected in the transmission, wherein, if the down position is not set, it is queried whether there is an increase in engine speed above the threshold value in the specific time window, wherein, upon determining that there is no increase in engine speed, it is determined that neutral is selected in the transmission and, upon determining that there is an increase in engine speed, it is determined that a gear is engaged in the transmission,
- wherein, upon determining that the motor vehicle is not at a standstill and that the motor vehicle is rolling backwards and the reversing light is deactivated, it is queried whether, after determining that the motor vehicle is rolling backwards, there is a change in the position of the clutch pedal from the down position to the up position, wherein, upon determining that there is no change in the position of the clutch pedal, it is determined that neutral is engaged in the transmission and, upon determining that there is a change in the position of the clutch pedal, it is queried whether, as a result of the change in the position of the clutch pedal, there is a change in direction of the motor vehicle,
- wherein, if it is determined that there is a change in direction of the motor vehicle, it is determined that the gear is engaged in the transmission, and if it is determined that there is a change in direction as a result of the change in the position of the clutch pedal, it is determined that neutral is engaged in the transmission;
- the driver assistance system of the motor vehicle is operated depending on the comparison.

2. Method according to claim 1,
**characterized in that,**
by means of the electronic computing device, depending on the comparison, a driving assistance function of the driver assistance system is activated when the selected gear is determined and deactivated when neutral is determined.

3. Method according to claim 1 or 2,
**characterized in that**
the at least one piece of wheel speed information characterizes the respective wheel speeds of all wheels of the motor vehicle.

4. Method according to any of the preceding claims,
**characterized in that,**
by means of the electronic computing device, a first piece of wheel speed information is received which characterizes the wheel speed of at least one wheel of the motor vehicle at a first point in time, and at least a second piece of wheel speed information is received which characterizes the wheel speed of at least one wheel of the motor vehicle at a second point in time which is different from the first point in time.

5. Method according to any of the preceding claims,
**characterized in that,**
by means of the electronic computing device, a first piece of clutch pedal position information is received which characterizes the position of the clutch pedal of the motor vehicle at a first point in time, and at least a second piece of clutch pedal position information is received which characterizes the position of the clutch pedal of the motor vehicle at a second point in time which is different from the first point in time.

6. Method according to any of the preceding claims,
**characterized in that,**
by means of the electronic computing device, at least one piece of direction information is received from a movement sensor device of the motor vehicle, the at least one piece of direction information characterizing a direction of movement of the motor vehicle.

7. Method according to any of the preceding claims,
**characterized in that,**
by means of the electronic computing device, at least one piece of engine speed information characterizing a speed of a crankshaft of an internal combustion engine is received from an engine speed detection device.

8. Motor vehicle comprising an electronic computing device which is configured to carry out a method according to any of claims 1 to 7.

## Revendications

1. Procédé permettant de faire fonctionner un système d'assistance au conducteur d'un véhicule automobile, dans lequel, par le biais d'un dispositif de calcul électronique
- au moins une information de vitesse de rotation de roue, qui caractérise une vitesse de rotation de roue d'au moins une roue du véhicule automobile, est reçue par un dispositif de détection de rotation relié à l'au moins une roue ;
- il est demandé si le véhicule automobile se trouve ou non à l'arrêt et si le véhicule automobile se trouve à l'arrêt,
- dans la requête suivante, qui peut être différée par rapport à la requête précédente, il est demandé si des tics de roue se produisent,
- et s'il est déterminé que des tics de roue se produisent, on détermine, en fonction de la position de la pédale d'embrayage ou d'un changement de position de pédale d'embrayage, si la pédale d'embrayage est placée en permanence en position haute ou en permanence en position basse pendant un changement de vitesse de roue ou un changement d'état de marche depuis l'arrêt du véhicule automobile jusqu'à l'apparition des tics de roue, et dans ces deux cas, il est déterminé que le point mort est réglé dans la boîte de vitesses, et si, pendant le changement des tics de roue, il est détecté un changement de position de pédale d'embrayage de la position basse de la pédale d'embrayage à la position haute de la pédale d'embrayage, il est demandé si le régime moteur augmente au-dessus d'une valeur seuil dans une fenêtre temporelle déterminée,
- dans lequel, lorsqu'on détermine que le véhicule automobile n'est pas à l'arrêt, il est déterminé si le véhicule automobile roule en marche arrière et si les feux de recul sont désactivés, dans lequel, lorsqu'on détermine que le véhicule automobile ne roule pas en marche arrière et que les feux de recul ne sont pas désactivés, il est demandé si la pédale d'embrayage se trouve dans la position inférieure et si, de ce fait, le point mort est réglé dans la boîte de vitesses, dans lequel si la position basse n'est pas réglée, il est demandé si le régime moteur augmente au-dessus de la valeur seuil dans la fenêtre de temps déterminée, dans lequel si on détermine que le régime moteur n'augmente pas, il est déterminé que le point mort est réglé dans la boîte de vitesses et si on détermine que le régime moteur augmente, il est déterminé qu'une vitesse est enclenchée dans la boîte de vitesses,
- dans lequel, lorsqu'on détermine que le véhicule automobile n'est pas à l'arrêt et que le véhicule automobile roule en marche arrière et que le feu de recul est désactivé, il est demandé si, après la détermination du roulement en marche arrière du véhicule automobile, un changement de position de pédale d'embrayage se produit de la position basse à la position haute, dans lequel, lorsqu'on détermine que le changement de position de pédale d'embrayage ne se produit pas, il est déterminé que le point mort est enclenché dans la boîte de vitesses et, lorsqu'il est déterminé que le changement de position de pédale d'embrayage se produit, il est demandé si un changement de direction du véhicule automobile se produit à la suite du changement de position de pédale d'embrayage,
- dans lequel, lorsqu'il est déterminé que le changement de direction du véhicule automobile se produit, il est déterminé que la vitesse est enclenchée dans la boîte de vitesses et, lorsqu'il est déterminé que le changement de direction se produit en raison du changement de position de pédale d'embrayage, il est déterminé que le point mort est enclenché dans la boîte de vitesses ;
- en fonction de la comparaison, le système d'assistance au conducteur du véhicule automobile est amené à fonctionner.

2. Procédé selon la revendication 1,
**caractérisé en ce que**
par le biais du dispositif de calcul électronique, en fonction de la comparaison, une fonction d'assistance au conducteur du système d'assistance au conducteur est activée lors de la détermination de la vitesse enclenchée et est désactivée lors de la détermination du point mort.

3. Procédé selon la revendication 1 ou 2,
**caractérisé en ce que**
l'au moins une information de vitesse de rotation de roue caractérise la vitesse de rotation de roue respective de toutes les roues du véhicule automobile.

4. Procédé selon l'une des revendications précédentes,
**caractérisé en ce que**
une première information de vitesse de roue est reçue par le biais du dispositif de calcul électronique, laquelle caractérise la vitesse de roue d'au moins une roue du véhicule automobile à un premier moment, et au moins une seconde information de vitesse de roue est reçue, laquelle caractérise la vitesse de roue d'au moins une roue du véhicule automobile à un second moment différent du premier moment.

5. Procédé selon l'une des revendications précédentes,
**caractérisé en ce que**
une première information de position de pédale d'embrayage est reçue par le biais du dispositif de calcul électronique, laquelle caractérise la position de la pédale d'embrayage du véhicule automobile à un premier moment et au moins une seconde information de position de pédale d'embrayage est reçue, laquelle caractérise la position de la pédale d'embrayage du véhicule automobile à un second moment différent du premier moment.

6. Procédé selon l'une des revendications précédentes,
**caractérisé en ce que**
par le biais du dispositif de calcul électronique, au moins une information de direction est reçue d'un dispositif capteur de mouvement du véhicule automobile, dans lequel l'au moins une information de direction caractérise une direction de mouvement du véhicule automobile.

7. Procédé selon l'une des revendications précédentes,
**caractérisé en ce que**
par le biais du dispositif de calcul électronique, au moins une information de vitesse de régime moteur, qui caractérise une vitesse de rotation d'un vilebrequin d'un moteur à combustion interne, est reçue d'un dispositif de détection de régime moteur.

8. Véhicule automobile comportant un dispositif de calcul électronique, lequel est conçu pour exécuter un procédé selon l'une des revendications 1 à 7.
